# EUROPEAN PATENT APPLICATION

(11) **EP 4 654 368 A1**
(43) Date of publication of application: **26.11.2025**
(21) Application number: 23939388.7
(22) Date of filing: 20.12.2023
(51) Int. Cl.: H01M 50/531, H01M 50/543

(54) **BATTERY CELL, BATTERY, AND ELECTRICAL DEVICE**

(30) Priority: 31.05.2023 CN 202310640611
(71) Applicant: Contemporary Amperex Technology Co., Limited, Ningde, Fujian 352100 (CN)
(72) Inventor: HUANG, Shaobin, Ningde, Fujian 352100 (CN); LEI, Yuyong, Ningde, Fujian 352100 (CN); GUO, Zhijun, Ningde, Fujian 352100 (CN); LI, Chuan, Ningde, Fujian 352100 (CN); YAN, Han, Ningde, Fujian 352100 (CN)
(74) Representative: Kraus & Lederer PartGmbB
(86) International application number: PCT/CN2023/140391
(87) International publication number: WO 2024/244420

(57) **Abstract**

Embodiments of the present application relate to the technical field of batteries, and provide a battery cell, a battery and an electrical device. The battery cell includes a shell, an electrode assembly and an electrode terminal. The shell includes a wall portion, the wall portion being provided with a lead-out hole. The electrode assembly is accommodated in the shell, and the electrode assembly includes an active substance-coated portion and a tab, the tab being disposed at an end of the active substance-coated portion facing the wall portion. The electrode terminal includes a terminal body and a position-limiting portion, the terminal body penetrating into the lead-out hole, and the position-limiting portion including a first extending section protruding out of a peripheral surface of the terminal body along a first direction. The tab includes a first connecting portion and a second connecting portion, the second connecting portion being located at one side of the first connecting portion along the first direction, the first connecting portion being connected to the active substance-coated portion, and the second connecting portion being connected to the first extending section. This type of structure shortens the length of the second connecting portion, so that the length of the tab is shortened, thereby decreasing the possibility of dislocation and pleating of the tab in the production process, and increasing the reliability of the battery cell.

## Description

### CROSS-REFERENCE TO RELATED APPLICATIONS

The present application claims priority to Chinese Patent Application (2023106406111), entitled "BATTERY CELL, BATTERY, AND ELECTRICAL DEVICE" filed on May 31, 2023, which is incorporated by reference in the present application.

### TECHNCIAL FIELD

The present application relates to the technical field of batteries, and in particular, to a battery cell, a battery, and an electrical device.

### BACKGROUND

With the development of new energy technology, batteries are more and more widely used, such as used in mobile phones, laptops, battery cars, electric vehicles, electric aircraft, electric ships, electric toy cars, electric toy ships, electric toy airplanes and power tools.

Battery cells are generally enlarged in size to achieve large capacity requirements, but with the increase of the size of the battery cells, the reliability of the battery cells may be reduced. Therefore, when designing the battery cell, in addition to the capacity of the battery cells, the reliability of the battery cells needs to be considered. Therefore, how to prolong the service life of battery cell is a problem to be solved urgently in battery technology.

### SUMMARY OF THE INVENTION

Embodiments of the present application provide a battery cell, a battery, and an electrical device, aiming to effectively improve the reliability of the battery cell.

In a first aspect, an embodiment of the present application provides a battery cell, which includes a shell, an electrode assembly and an electrode terminal; the shell includes a wall portion, the wall portion being provided with a lead-out hole; the electrode assembly is accommodated in the shell, and the electrode assembly includes an active substance-coated portion and a tab, the tab being disposed at an end of the active substance-coated portion facing the wall portion; the electrode terminal includes a terminal body and a position-limiting portion, the terminal body penetrating into the lead-out hole, the position-limiting portion being configured to limit the terminal body from separating from the lead-out hole in a direction facing away from the active substance-coated portion, and the position-limiting portion including a first extending section protruding out of a peripheral surface of the terminal body along a first direction; and the tab includes a first connecting portion and a second connecting portion, the second connecting portion being located at one side of the first connecting portion along the first direction, the first connecting portion being connected to the active substance-coated portion, and the second connecting portion being connected to the first extending section.

In the above technical solution, the second connecting portion is located on one side of the first connecting portion along the first direction, the second connecting portion is connected to the first extending section of the position-limiting portion protruding out of the peripheral surface of the terminal body along the first direction, thus the length of the second connecting portion is shortened, furthermore, the length of the tab is shortened, the possibility of dislocation and pleating of the tab in the production process is reduced, and as a result, the reliability of the battery cell is improved.

In some embodiments, the position-limiting portion further includes a second extending section protruding out of the peripheral surface of the terminal body in a direction opposite to the first direction; in the first direction, the distance from the end of the second extending section far away from the terminal body to the central axis of the terminal body is a first distance, the first extending section includes a lengthened region, the distance from the lengthened region to the central axis is larger than or equal to the first distance, and the second connecting portion is connected to the lengthened region. The lengthened region is arranged, so that the length of the first extending section in the second direction is increased, and the second extending section can be lengthened in a direction far away from the terminal body; the second connecting portion is connected to the lengthened region, thus the second connecting portion is further away from the terminal body in the first direction; and in this way, the second connecting portion can be made shorter, which is conducive to further decreasing the length of the tab.

In some embodiments, in the first direction, the distance from the end of the second connecting portion close to the terminal body to the central axis is a second distance, and the second distance is larger than or equal to the first distance. Therefore, the end of the second connecting portion close to the terminal body is further away from the terminal body in the first direction, the length of the second connecting portion is further shortened, and the length of the tab is further shortened.

In some embodiments, the first connecting portion is opposite to the middle position of the active substance-coated portion in the first direction; and/or, the terminal body is opposite to the middle position of the active substance-coated portion in the first direction. If the first connecting portion is opposite to the middle position of the active substance-coated portion in the first direction, the tab is arranged in the middle before being bent, which is conducive to molding the tab, and the difficulty in molding the tab is reduced. If the terminal body is opposite to the middle position of the active substance-coated portion in the first direction, the terminal body is arranged in the middle, which is conducive to connecting the electrode terminal and an external component to output or input electric energy.

In some embodiments, the tab further includes a third connecting portion and a fourth connecting portion; the first connecting portion, the third connecting portion, the fourth connecting portion and the second connecting portion are sequentially connected; and the second connecting portion and the third connecting portion are oppositely arranged in the axial direction of the terminal body. The tab is in a bent state between the active substance-coated portion and the electrode terminal, thus the internal space occupied by the tab in the battery cell is reduced, and more space is provided for the active substance-coated portion, which is conducive to improving the energy density of the battery cell.

In some embodiments, in the axial direction of the terminal body, the second connecting portion is connected to the side of the first extending section facing the active substance-coated portion. In this way, the distance from the second connecting portion to the active substance-coated portion in the axial direction of the terminal body is reduced, and furthermore, the length of the tab can be effectively decreased.

In some embodiments, the terminal body and the position-limiting portion are integrally molded. In this way, the connection strength of the terminal body and the position-limiting portion is high, the terminal body and the position-limiting portion are firm, thus the possibility of the terminal body separating from the position-limiting portion due to impact force during regular use of the battery cell is reduced, and the possibility of the battery cell failing in regular use is reduced.

In some embodiments, the battery cell further includes a first insulating member; and in the axial direction of the terminal body, the first insulating member includes a first insulating portion arranged between the first extending section and the wall portion, and a heat insulation structure is arranged on the side of the first insulating portion facing the first extending section and/or the side of the first extending section facing the first insulating portion. The heat insulation structure plays a role in heat insulation, which delays or prevents heat transfer between the first extending section and the first insulating portion, reduces the possibility of heat being transferred from the first extending section to the first insulating portion to melt the first insulating member, and further reduces the possibility of the first insulating portion failing in insulation.

In some embodiments, the heat insulation structure includes a clearance groove formed in the first insulating portion and/or the first extending section. The heat insulation structure is simple and easy to mold. The clearance groove is arranged, so that the first extending section and the first insulating portion are difficult to realize direct contact in a region corresponding to the clearance groove, and a good heat insulation effect can be achieved.

In some embodiments, the second connecting portion and the first extending section are connected by welding to form a weld mark region, and the orthographic projections of the weld mark region and the clearance groove are at least partially overlapped in a plane vertical to the axial direction of the terminal body. When the second connecting portion and the first extending section are welded, the first extending section will produce a large amount of heat in the weld mark region, which increases the temperature of the first extending section, and because the orthographic projections of the weld mark region and the clearance groove are at least partially overlapped in the plane vertical to the axial direction of the terminal body, the clearance groove can achieve a good heat insulation effect, which reduces the influence of the first extending section and the second connecting portion on the first insulating portion in the welding process.

In some embodiments, the area of the orthographic projection of the weld mark region in the plane is S₁, and the area of the overlapped region of the orthographic projections of the weld mark region and the clearance groove in the plane is S₂, which meet: S₂/S₁≥1/3. In this way, the proportion of the area of the overlapped area of the orthographic projections of the weld mark region and the clearance groove in the plane to the area of the orthographic projection of the weld mark region in the plane is large, and more heat produced by the weld mark region in the welding process of the first extending section can be blocked by the clearance groove, which improves the blocking capacity of the clearance groove on the heat of the weld mark region.

In some embodiments, S₂/S₁≥1/2. The proportion of S₂ in S₁ is further increased, and thus the blocking capacity of the clearance groove on the heat of the weld mark region is further improved.

In some embodiments, a fusing portion is formed on the first extending section. When current flowing through the first extending section is too large, the fusing portion can be automatically fused to realize overcurrent protection for the battery cell.

In some embodiments, a through hole is formed in the first extending section, and two ends of the through hole correspondingly extend to two opposite surfaces of the first extending section in the axial direction of the terminal body to correspondingly form the fusing portion. The mode of forming the through hole in the first extending section is utilized to correspondingly form the fusing portion, so that the mode of molding the fusing portion is simple. After the through hole is formed in the first extending section, the cross sectional area of the formed fusing portion is smaller than that of other parts of the first extending section, so the resistance of the fusing portion is larger than that of other parts of the first extending section, and when the current flowing through the first extending section is too large, the fusing portion can be heated and fused.

In some embodiments, a plurality of through holes are formed in the first extending section, the plurality of through holes are arranged at intervals in a second direction, and the second direction intersects with the first direction. Under the condition that the overcurrent area of the fusing portion is constant, the plurality of through holes are formed in the first extending section, and the through holes can be made smaller, so that difficulty in molding the through holes can be reduced.

In some embodiments, the first extending section is provided with two through holes, the two through holes extend to the two ends of the first extending section respectively in the second direction, and the fusing portion is located between the two through holes. In this way, only one fusing portion is formed on the first extending section, so the overcurrent area of the fusing portion is easier to control, the structure of the electrode terminal is simplified, and the difficulty in molding the electrode terminal is reduced.

In some embodiments, the battery cell further includes a second insulating member, and the second insulating member covers at least a part of the outer surface of the fusing portion. The second insulating member plays an insulating role, which reduces the risk that the electrode terminal conducts a positive electrode plate and a negative electrode plate after the fusing portion is fused.

In some embodiments, the second insulating member includes an insulating coating arranged on the outer surface of the fusing portion, an insulating glue layer bonded to the outer surface of the fusing portion or a hot-melting insulating layer connected to the outer surface of the fusing portion in a hot-melting mode. The insulating coating is a coating arranged on the outer surface of the fusing portion, and it is small in thickness, and occupies a small space. The insulating glue layer can be bonded to the fusing portion, its assembling efficiency is high, and the production cost is low. The hot-melting insulating layer is connected to the fusing portion in a hot-melting mode, and can play an insulating role and can also play a limiting role after the fusing portion is fused, thus maintaining the original form of the electrode terminal, reducing the possibility of the electrode terminal making contact with an electrode plate in the active substance-coated portion after the fusing portion is fused, and further reducing the possibility of short circuit in the battery cell.

In some embodiments, the second insulating member includes a second insulating portion and a third insulating portion, the second insulating portion and the third insulating portion jointly define a first space, the fusing portion is accommodated in the first space, and the second insulating portion is detachably connected to the third insulating portion. Therefore, the second insulating member can be conveniently mounted and dismounted. The second insulating member with such structure can achieve an insulating effect and a limiting effect after the fusing portion is fused, thus maintaining the original form of the electrode terminal, reducing the possibility of the electrode terminal making contact with the electrode plate in the active substance-coated portion after the fusing portion is fused, and further reducing the possibility of short circuit in the battery cell.

In some embodiments, the second insulating portion is provided with a first clamping portion, the third insulating portion is provided with a second clamping portion, and the first clamping portion is in clamping fit with the second clamping portion. When mounting the second insulating member, the first clamping portion is in clamping fit with the second clamping portion to connect together the second insulating portion and the third insulating portion; if the first clamping portion is not in fit with the second clamping portion, the second insulating portion and the third insulating portion can be disconnected, and thus the second insulating portion and the third insulating portion can be conveniently mounted and dismounted.

In some embodiments, the position-limiting portion is provided with a weight reducing structure. The weight of the electrode terminal can be reduced by the weight reducing structure, and thus the weight of the battery cell is further reduced.

In some embodiments, the weight reducing structure includes a weight reducing hole formed in the position-limiting portion, and two ends of the weight reducing hole extend to two opposite surfaces of the position-limiting portion in the axial direction of the terminal body respectively. The weight of the electrode terminal is reduced by the weight reducing hole formed in the position-limiting portion, and the implementation mode is simple.

In some embodiments, the weight reducing structure includes a plurality of weight reducing holes which are formed around the terminal body. The weight of the electrode terminal can be further reduced by the plurality of weight reducing holes formed in the position-limiting portion.

In some embodiments, the weight reducing holes are formed in four corners of the position-limiting portion. The weight reducing holes are formed in four corners of the position-limiting portion, so that the weight of the electrode terminal is further reduced, and meanwhile, overcurrent of the electrode terminal is not easily affected.

In some embodiments, the weight reducing holes are formed in the first extending section to correspondingly form the fusing portion. The weight reducing holes are formed in the first extending section, so that the weight of the electrode terminal is reduced while the fusing portion is formed.

In some embodiments, the shell includes a case and an end cover, the case is provided with an opening, the end cover covers the opening, and the end cover is the wall portion. When assembling the battery cell, the electrode terminal can be mounted on the end cover, then the tab is connected to the electrode terminal, then the electrode assembly is accommodated in the case, and finally the end cover is connected to the case to cover the opening of the case. By means of this structure, the mounting of the electrode terminal and the connection between the tab and the electrode terminal can be achieved more conveniently.

In a second aspect, an embodiment of the present application provides a battery which includes the battery cell provided by any embodiment in the first aspect.

In a third aspect, an embodiment of the present application provides an electrical device which includes the battery cell provided by any embodiment in the first aspect, and the battery cell is configured to provide electric energy to the electrical device.

### BRIEF DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided by some embodiments of the present application;
FIG. 4 is a partial view of a battery cell provided by some embodiments of the present application;
FIG. 5 is a partial enlarged view of a part A in FIG. 4;
FIG. 6 is an isometric diagram of an electrode terminal shown in FIG. 4;
FIG. 7 is a top view of an electrode terminal shown in FIG. 6;
FIG. 8 is a partial view of a battery cell provided by some other embodiments of the present application;
FIG. 9 is a structural schematic diagram of an electrode terminal shown in FIG. 8;
FIG. 10 is a partial enlarged view of a part B in FIG. 8;
FIG. 11 is an isometric diagram of an electrode terminal shown in FIG. 10;
FIG. 12 is an isometric diagram of an electrode terminal provided by some other embodiments of the present application;
FIG. 13 is an isometric diagram of an electrode terminal and a second insulating member after connection according to some embodiments of the present application;
FIG. 14 is a cross-sectional view of an electrode terminal and a second insulating member shown in FIG. 13 after connection;
FIG. 15 is an isometric diagram of an electrode terminal and a second insulating member after connection according to some other embodiments of the present application;
FIG. 16 is an isometric diagram of an electrode terminal and a second insulating member after connection according to yet some other embodiments of the present application;
FIG. 17 is a structural schematic diagram of an electrode terminal and a second insulating member shown in FIG. 16 after connection;
FIG. 18 is a C-C cross-sectional view of an electrode terminal and a second insulating member shown in FIG. 17 after connection; and
FIG. 19 is an isometric diagram of an electrode terminal provided by some embodiments of the present application.

Reference numerals: 1-shell; 11-case; 12-end cover; 13-wall portion; 131-lead-out hole; 2-electrode assembly; 21-active substance-coated portion; 22-tab; 221-first connecting portion; 222-second connecting portion; 223-tab root portion; 224-third connecting portion; 225-fourth connecting portion; 3-electrode terminal; 31-terminal body; 311-peripheral surface; 312-central axis; 32-position-limiting portion; 321-first extending section; 3211-lengthened region; 3212-connecting region; 3213-first surface; 3214-second surface; 3215-clearance groove; 3216-weld mark region; 3217-fusing portion; 3218-through hole; 322-first cross section; 323-second extending section; 324-second cross section; 235-third cross section; 326-weight reducing hole; 4-third insulating member; 5-connecting member; 6-fourth insulating member; 7-sealing member; 8-first insulating member; 81-first insulating portion; 9-second insulating member; 91-second insulating portion; 911-first clamping portion; 92-third insulating portion; 921-second clamping portion; 93-first space; 10-battery cell; 20-box body; 201-first portion; 202-second portion; 100-battery; 200-controller; 300-motor; 1000-vehicle; X-first direction; Y-second direction; and Z-axial direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In this embodiment of the present application, the battery cell may be a secondary battery, and the secondary battery refers to a battery cell that can activate an active material in a charging mode for continuous use after the battery cell is discharged.

The battery cell includes but is not limited to a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon-fine electrode, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{o.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate can include a negative electrode current collector.

For example, a metal foil, a foam metal, or a composite current collector may be used as the negative electrode current collector. For example, as the metal foil, silver surface-treated aluminum or stainless steel, stainless steel, copper, aluminum, nickel, baked carbon, carbon, nickel, titanium, or the like can be used. The foam metal may be foam nickel, foam copper, foam aluminum, foam alloy, or foam carbon, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

For example, each negative electrode plate may include a negative electrode current collector and a negative active material arranged on at least one surface of the negative electrode current collector.

For example, the negative electrode current collector has two surfaces opposite to each other in its own thickness direction, and the negative active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the spacer is an isolation film. The isolation film can be any well-known porous separator with high chemical stability and mechanical stability.

As an example, the material of the isolation film may be selected from a group consisting of at least one of glass fiber, non-woven fabric, polyethylene, polypropylene, and polyvinylidene fluoride. The isolation film can be a single-layer film or a multi-layer composite film. When the isolation film is the multi-layer composite film, the materials of all layers can be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode and plays a role of transmitting ions and isolates the positive electrode from the negative electrode.

In some embodiments, the battery cell further includes an electrolyte, and the electrolyte plays a role in conducting ions between the positive electrode and the negative electrode. The electrolyte can be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent can be ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte can be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

As an example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte and a hydride solid electrolyte.

As an example, the composite solid electrolyte is formed by adding an inorganic solid electrolyte filler into the polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tab includes a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

For example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

A battery mentioned in the embodiments of the present application is a single physical module including one or a plurality of battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage electric cabinet and the like.

For the battery cell, it can include a shell, an electrode assembly and an electrode terminal, in which, the electrode assembly is accommodated in the shell, the electrode terminal is arranged on the wall portion of the shell, the electrode assembly includes an active substance-coated portion and a tab arranged at the end part of the active substance-coated portion, and the tab is electrically connected to the electrode terminal to input or output electric energy through the electrode terminal.

In order to improve the overcurrent capacity of the battery cell, the tab of the electrode assembly of the battery cell can be directly connected to the electrode terminal, and the tab is connected to a central region of the electrode terminal. In order to realize effective connection between the tab and the electrode terminal, it is needed to bend and arrange the tab between the active substance-coated portion and the electrode terminal. In order to meet the large-capacity requirement for the battery cell, the battery cell can be enlarged in size, and with the increase of the size of the battery cell, the width of the wall portion, provided with the electrode terminal, of the shell is increased. Taking the electrode terminal arranged on an end cover as an example, with the increase of the width of the end cover, the length of the part, connected to the electrode terminal, of the tab in the width direction of the end cover will be increased, so that the whole tab is lengthened. The overlong tab is easily dislocated and pleated in the production process, resulting in poor reliability of the battery cell.

In view of this, an embodiment of the present application provides a battery cell, an electrode terminal includes a terminal body and a position-limiting portion, the position-limiting portion including a first extending section protruding out of a peripheral surface of the terminal body along a first direction; and the tab includes a first connecting portion and a second connecting portion, the second connecting portion being located at one side of the first connecting portion along the first direction, the first connecting portion being connected to an active substance-coated portion, and the second connecting portion being connected to the first extending section.

In such battery cell, the second connecting portion is located on one side of the first connecting portion along the first direction, the second connecting portion is connected to the first extending section of the position-limiting portion protruding out of the peripheral surface of the terminal body in the first direction, thus the length of the second connecting portion is shortened, furthermore, the length of the tab is shortened, the possibility of dislocation and pleating of the tab in the production process is reduced, and as a result, the reliability of the battery cell is improved.

The technical solution in the embodiment of the present application is suitable for the battery and the electrical device using the battery.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

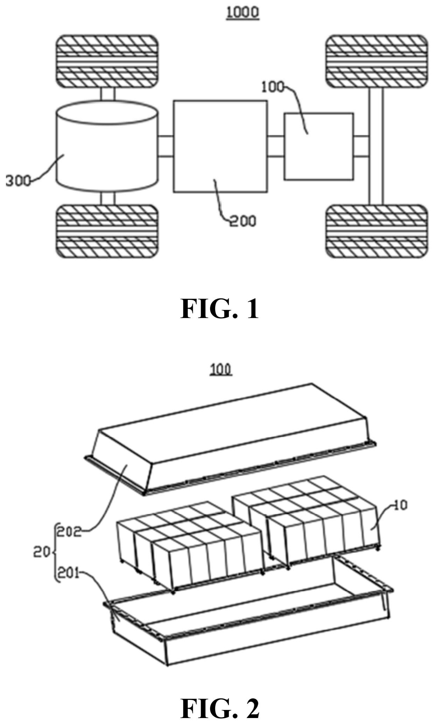

Referring to Fig. 1, Fig. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to Fig. 2, Fig. 2 is an exploded diagram of a battery 100 according to some embodiments of the present application. The battery 100 includes a box cell 10 and a box body 20. The battery cell 10 is accommodated in the box body 20.

The box body 20 is a component for accommodating the battery cell 10, and the box body 20 provides an accommodating space for the battery cell 10. The box body 20 may be of various structures. In some embodiments, the box body 20 may include a first portion 201 and a second portion 202, and the first portion 201 and the second portion 202 are mutually covered to define an accommodating space for accommodating the battery cell 10. The first portion 201 and the second portion 202 can be in various shapes, such as a cuboid shape, and a cylinder shape. The first portion 201 can be of a hollow structure with one side opened, the second portion 202 can also be of a hollow structure with one side opened, and the opened side of the second portion 202 covers the opened side of the first portion 201 to form the box body 20 with the accommodating space. Or the first portion 201 can be of a hollow structure with one side opened, the second portion 202 is of a plate-shaped structure, and the second portion 202 covers the opened side of the first portion 201 to form the box body 20 with the accommodating space.

In the battery 100, one or a plurality of battery cells 10 can be provided. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. It is also possible that all the battery cells 10 are directly connected in series or in parallel or in series-parallel, and then an entirety composed of all the battery cells 10 is received in the box body 20.

In some embodiments, the battery 100 further includes a bus component, and the plurality of battery cells 10 may be electrically connected to each other via the bus component, so as to implement series connection, parallel connection, or series-parallel connection of the plurality of battery cells 10. The bus component can be a metal conductor, such as copper, iron, aluminum, stainless steel, aluminum alloy and the like.

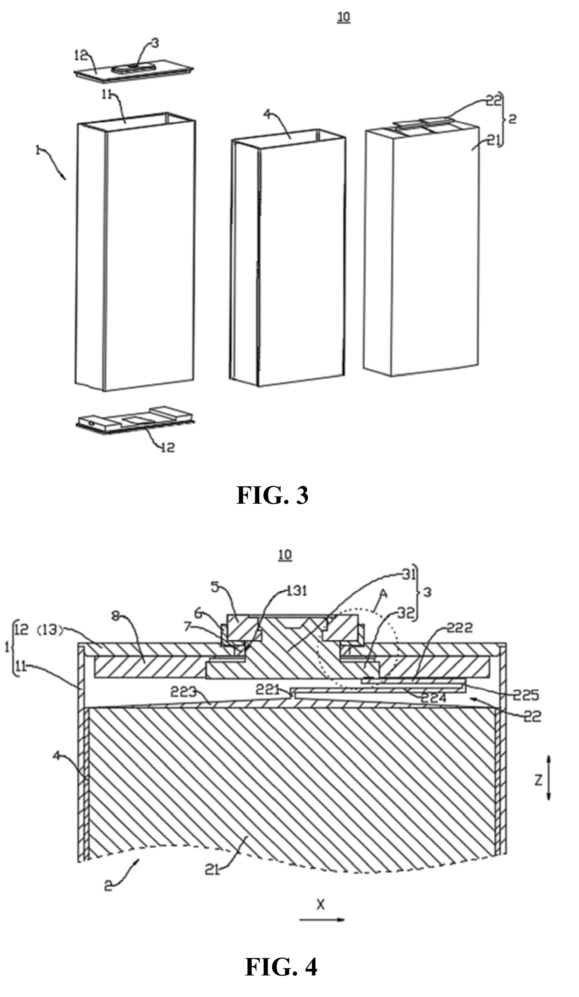

With reference to FIG. 3, FIG. 3 is an exploded view of a battery cell 10 provided by some embodiments of the present application. The battery cell 10 may include a shell 1, an electrode assembly 2 and an electrode terminal 3, in which, the electrode assembly 2 is accommodated in the shell 1, and the electrode terminal 3 is arranged on the shell 1, and is electrically connected to the electrode assembly 2.

The shell 1 is a component for accommodating the electrode assembly 2, an electrolyte and the like; For example, the shell 1 may include a case 11 and an end cover 12.

The case 11 may be of a hollow structure with an opening formed in one end, or the case 11 may be of a hollow structure with openings formed in two opposite ends. The case 11 may have various shapes, such as a cylindrical shape or a prismatic shape. The case 11 may be made of various materials, such as copper, iron, aluminum, steel, aluminum alloy, and plastic.

The end cover 12 is a component that closes the opening of the case 11 to isolate an internal environment of the battery cell 10 from an external environment. The end cover 12 and the case 11 jointly define an accommodating space for accommodating the electrode assembly 2, the electrolyte, and other components. A shape of the end cover 12 may be matched with a shape of the shell 1. For example, the case 11 is of a cuboid structure, and the end cover 12 is of a rectangular platy structure matched with the shell 1. For another example, the case 11 is of a cylindrical structure, and the end cover 12 is of a circular platy structure matched with the case 11. The case 12 may also be made of various materials, such as copper, iron, aluminum, steel, aluminum alloy, and plastic. The material of the end cover 12 and the material of the case 11 may be the same or different.

In the embodiment where the case 11 has the opening formed in one end, one end cover 12 can be correspondingly provided. In an embodiment that the case 11 is provided with openings in two opposite ends, two end covers 12 can be correspondingly arranged, the two end covers 12 cover the two openings of the case 11 respectively, and the two end covers 12 and the case 11 jointly define the accommodating space.

The electrode terminal 3 is a component for inputting or outputting electric energy in the battery cell 10. The electrode terminal 3 is arranged on the shell 1, and is electrically connected to a tab 22 of the electrode assembly 2. The electrode terminal 3 can be arranged on the housing body 11 of the outer housing 1, or arranged on the end cover 12 of the outer housing 1. The electrode terminal 3 can be directly connected to the tab 22, for example, the electrode terminal 3 is directly welded with the tab 22.

As an example, as shown in FIG. 3, the case 11 is of a hollow structure provided with openings in two opposite ends, end covers 12 are arranged at the two opposite ends of the case 11, and the electrode terminals 3 are arranged on the end covers 12 at the two ends of the case 11; the tabs 22 are formed at the two opposite ends of the electrode assembly 2, in which, the tab 22 at one end of the electrode assembly 2 is a positive tab, and the tab 22 at the other end of the electrode assembly 2 is a negative tab; and the electrode terminal 3 on one end cover 12 is electrically connected to the positive tab, and the electrode terminal 3 on the other end cover 12 is electrically connected to the negative tab.

In some embodiments, the battery cell 10 can further include a third insulating member 4, the third insulating member 4 is arranged between the electrode assembly 2 and the case 11 and is configured to insulate and isolate the electrode assembly 2 and the case 11. The third insulating member 4 is made of an insulating material, such as plastic, and rubber. As an example, the third insulating member 4 is an insulating film wrapping the periphery of the electrode assembly 2.

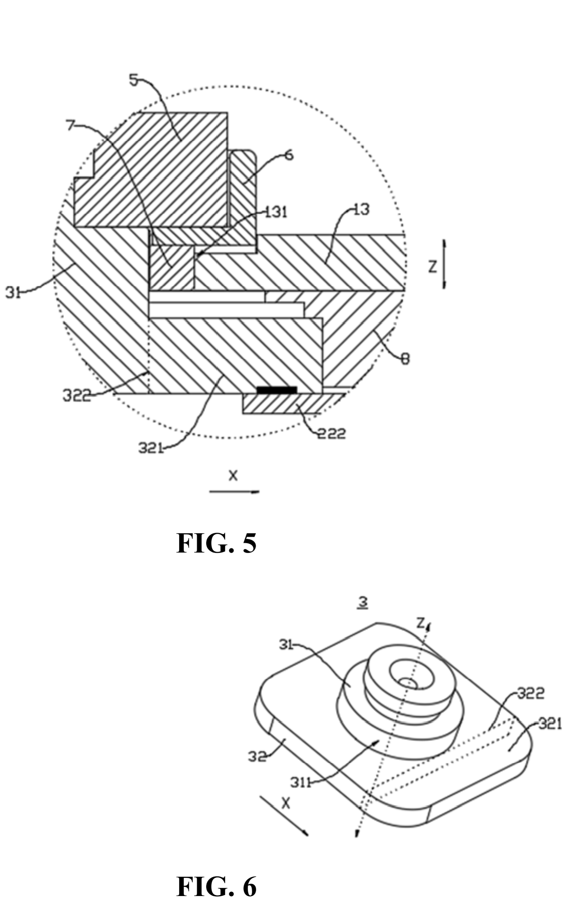

With reference to FIG. 4 and FIG. 5, FIG. 4 is a partial view of a battery cell 10 provided by some embodiments of the present application, and FIG. 5 is a partial enlarged view of a part A in FIG. 4. An embodiment of the present application provides the battery cell 10, which includes the shell 1, the electrode assembly 2 and the electrode terminal 3. The shell 1 includes a wall portion 13, and the wall portion 13 is provided with a lead-out hole 131. The electrode assembly 2 is accommodated in the shell 1, the electrode assembly 2 includes an active substance-coated portion 21 and the tab 22, and the tab 22 is arranged at one end of the active substance-coated portion 21 facing the wall portion 13. The electrode terminal 3 includes a terminal body 31 and a position-limiting portion 32, the terminal body 31 penetrates through the lead-out hole 131, the position-limiting portion 32 is configured to limit the terminal body 31 from separating from the lead-out hole 131 in the direction facing away from the active substance-coated portion 21, and the position-limiting portion 32 includes a first extending section 321 protruding out of a peripheral surface 311 of the terminal body 31 in the first direction X. The tab 22 includes a first connecting portion 221 and a second connecting portion 222, the second connecting portion 222 is located on one side of the first connecting portion 221 in the first direction X, the first connecting portion 221 is connected to the active substance-coated portion 21, and the second connecting portion 222 is connected to the first extending section 321.

The wall portion 13 can be the end cover 12 in the shell 1, and it is to be understood that the electrode terminal 3 is arranged on the end cover 12; the wall portion 13 can also be a wall of the case 11 in the shell 1, and it is to be understood that the electrode terminal 3 is arranged on the case 11. The wall portion 13 can be a circular wall portion, a rectangular wall portion and the like.

The lead-out hole 131 in the wall portion 13 is configured to lead out the terminal body 31 of the electrode terminal 3, so that the terminal body 31 is conveniently connected to an external component of the battery cell 10, for example, the terminal body 31 is connected to a bus component. The lead-out hole 131 penetrates through the wall portion 13 in the thickness direction of the wall portion 13, and the lead-out hole 131 can be a rectangular hole, a circular hole and the like.

The electrode assembly 2 may include a positive electrode plate, a negative electrode plate and a spacer, and the electrode assembly 2 can be of a wound structure formed by winding the positive electrode plate, the spacer and the negative electrode plate, and can also be of a laminated structure formed by laminating the positive electrode plate, the spacer and the negative electrode plate. The active substance-coated portion 21 is a main body part of the electrode assembly 2, the active substance-coated portion 21 can be a part, corresponding to a region coated with the active substance layer, of the electrode plate in the electrode assembly 2, and the tab 22 can be a part, not coated with the active substance layer, of the electrode plate.

The first connecting portion 221 is a part, connected to the active substance-coated portion 21, of the tab 22, and the second connecting portion 222 is a part, connected to the electrode terminal 3, of the tab 22. The first connecting portion 221 can be of a flat and straight sheet structure, and can also be of an arc-shaped sheet structure; and the second connecting portion 222 can be of a flat and straight sheet structure, and can also be of an arc-shaped sheet structure. In the embodiment shown in FIG. 4, the first connecting portion 221 and the second connecting portion 222 are both of the flat and straight sheet structure. As an example, the tab 22 is bent between the electrode terminal 3 and the active substance-coated portion 21, the tab 22 is bent to form a plurality of connected bent sections, and the first connecting portion 221 and the second connecting portion 222 are two bent sections at the two ends of the tab 22.

The first connecting portion 221 can be directly connected or indirectly connected to the active substance-coated portion 21. As an example, the first connecting portion 221 is connected to the active substance-coated portion 21 through a tab root portion 223.

The first direction X is the direction in which the first extending section 321 protrudes out of the peripheral surface 311 of the terminal body 31, the first direction X is one-way, and the first direction X can be vertical to the axial direction Z of the terminal body 31. Taking the wall portion 13 being a rectangular wall portion as an example, the direction X can be parallel to the length direction of the wall portion 13, and can also be parallel to the width direction of the wall portion 13.

The second connecting portion 222 is located on the side of the first connecting portion 221 in the first direction X, and taking the first direction X being from the left side to the right side of the electrode terminal 3 as an example, the second connecting portion 222 is located on the right side of the first connecting portion 221.

The electrode terminal 3 is a metal conductor. The electrode terminal 3 can be integrally made of the same conductive material, and the conductive material can be copper, iron, aluminum, steel, aluminum alloy and the like; and the electrode terminal 3 can also be formed by compositing a plurality of parts made of different conductive materials, for example, the terminal body 31 is formed by compositing copper and aluminum.

The terminal body 31 is a part penetrating into the lead-out hole 131, the terminal body 31 is cylindrical, and the terminal body 31 can be cylindrical, prismatic and the like. The position-limiting portion 32 is a part, used for limiting the terminal body 31 from separating from the lead-out hole 131 in the direction facing away from the active substance-coated portion 21, of the electrode terminal 3. The position-limiting portion 32 can be a plate-shaped member, such as a rectangular plate, and a circular plate. The position-limiting portion 32 can be connected to the end of the terminal body 31 facing the electrode assembly 2. As an example, the position-limiting portion 32 is located on the inner side of the wall portion 13, namely, the position-limiting portion 32 is located on the side of the wall portion 13 facing the active substance-coated portion 21. The orthographic projections of the position-limiting portion 32 and the wall portion 13 are at least partially overlapped in a plane vertical to the axial direction Z of the terminal body 31, so that the position-limiting portion 32 can effectively limit the terminal body 31 from separating from the lead-out hole 131 in the direction facing away from the active substance-coated portion 21.

The battery cell 10 can further include a connecting member 5, and the connecting member 5 is located on the side of the wall portion 13 facing away from the active substance-coated portion 21 and is connected to the terminal body 31. The connecting member 5 is configured to limit the terminal body 31 to move in the direction close to the electrode assembly 2 so as to fix the electrode terminal 3 to the wall portion 13 together with the position-limiting portion 32. As an example, the connecting member 5 is riveted to the terminal body 31. The connecting member 5 can be connected to the external component so as to increase the overcurrent area of the electrode terminal 3. In order to achieve insulation between the connecting member 5 and the wall portion 13, a fourth insulating member 6 can be arranged between the connecting member 5 and the wall portion 13. In order to improve the sealing performance between the terminal body 31 and the wall portion 13, a sealing member 7 can be arranged between the terminal body 31 and the wall portion 13, and at least part of the sealing member 7 is located in the lead-out hole 131.

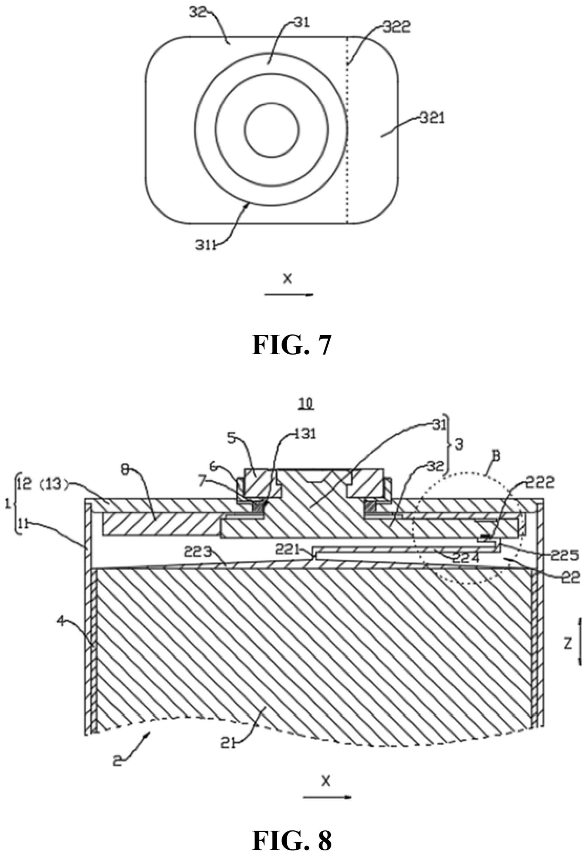

The first extending section 321 is a part, protruding out of the peripheral surface 311 of the terminal body 31 in the first direction X, of the limiting portion 32. The peripheral surface 311 of the terminal body 31 is arranged around the axis of the terminal body 31. With reference to FIG. 6 and FIG. 7, FIG. 6 is an isometric diagram of an electrode terminal 3 shown in FIG. 4; and FIG. 7 is a top view of an electrode terminal 3 shown in FIG. 6. Taking the peripheral surface 311 of the terminal body 31 being a cylindrical surface as an example, a first cross section 322 of the position-limiting portion 32 tangent to the peripheral surface 311 is a starting position of the first extending section 321, the first cross section 322 is vertical to the first direction X, and the first extending section 321 extends from the starting position in the first direction X. The first extending section 321 and the second connecting portion 222 can be connected in various modes such as welding and bonding so as to achieve electrical connection between the electrode terminal 3 and the tab 22.

In the related technology, the tab 22 is generally connected to a central region of the electrode terminal 3, and the central region of the electrode terminal 3 is the central region of the terminal body 31, so the tab 22 is too long, and the tab 22 is easily dislocated and pleated in the production process, resulting in poor reliability of the battery cell 10. In the embodiment of the present application, the second connecting portion 222 is located on the side of the first connecting portion 221 in the first direction X, the second connecting portion 222 is connected to the first extending section 321, protruding out of the peripheral surface 311 of the terminal body 31 in the first direction X, in the position-limiting portion 32, thus the length of the second connecting portion 222 is shortened, furthermore, the length of the tab 22 is shortened, the possibility of dislocation and pleating of the tab in the production process 22 is reduced, and as a result, the reliability of the battery cell 10 is improved.

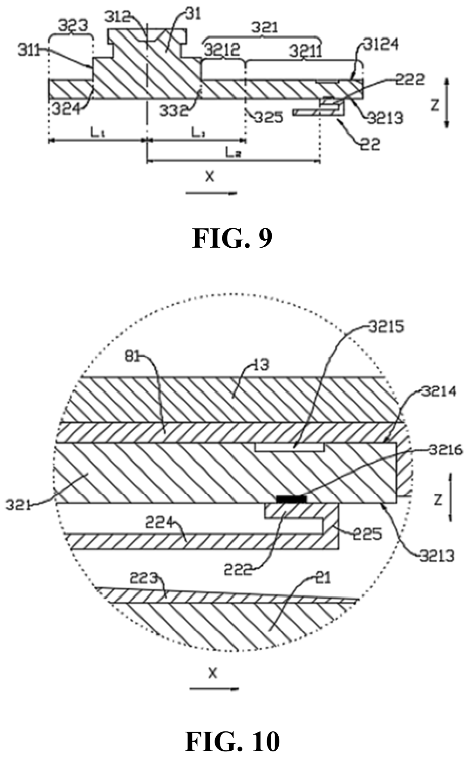

In some embodiments, with reference to FIG. 8 and FIG. 9, FIG. 8 is a partial view of a battery cell 10 provided by some other embodiments of the present application; and FIG. 9 is a structural schematic diagram of an electrode terminal 3 shown in FIG. 8. The position-limiting portion 32 further includes a second extending section 323 protruding out of the peripheral surface 311 of the terminal body 31 in the direction opposite to the first direction X. In the first direction X, the distance from the end of the second extending section 323 far away from the terminal body 31 to the central axis 312 of the terminal body 31 is a first distance L₁, the first extending section 321 includes a lengthened region 3211, the distance from the lengthened region 3211 to the central axis 312 is larger than or equal to the first distance L₁, and the second connecting portion 222 is connected to the lengthened region 3211.

The second extending section 323 is a part, protruding out of the peripheral surface 311 of the terminal body 31 in the direction opposite to the first direction X, of the position-limiting portion 32. The extending direction of the second extending section 323 is opposite to the extending direction of the first extension; and taking the first direction X being from the left side to the right side of the electrode terminal 3 as an example, the first extending section 321 extends from the peripheral surface 311 of the terminal body 31 from left to right, and the second extending section 323 extends from the peripheral surface 311 of the terminal body 31 from right to left. Taking the peripheral surface 311 of the terminal body 31 being a cylindrical surface as an example, a second cross section 324 of the position-limiting portion 32 tangent to the peripheral surface 311 is the starting position of the second extending section 323, the second cross section 324 is vertical to the first direction X, the second cross section 324 and the first cross section 322 are located on two sides of the terminal body 31 in the first direction X respectively, and the second extending section 323 extends from the starting position in the direction opposite to the first direction X.

The lengthened region 3211 can be a region, distanced from the central axis 312 by the first distance L₁, in the first extending section 321. The first extending section 321 further includes a connecting region 3212; and in the first direction X, the connecting region 3212 is located between the terminal body 31 and the lengthened region 3211 and connects the terminal body 31 with the lengthened region 3211. As an example, in the first direction X, the length of the connecting region 3212 is equal to that of the second extending section 323. In the first direction X, the length of the first extending section 321 is larger than that of the second extending section 323, and the difference between the length of the first extending section 321 and the length of the second extending section 323 is equal to that of the lengthened region 3211.

The position-limiting portion 32 is provided with a third cross section 235 vertical to the first direction X; and in the first direction X, the distance from the third cross section 235 to the central axis 312 of the terminal body 31 is the first distance L₁, the third cross section 235 can serve as the starting position of the lengthened region 3211, and the lengthened region 3211 extends from the starting position in the first direction X.

The first distance L₁ can be measured by a vernier caliper. Specifically, firstly, the position of the central axis 312 of the terminal body 31 is determined from the end surface of one end of the terminal body 31 in the axial direction Z, and a marking point is made; and then the distance from one end of the second extending section 323 far away from the terminal body 31 to the marking point in the first direction X is measured by the vernier caliper in the environment of 25±2°C, and the distance is the first distance L₁.

In this embodiment, the lengthened region 3211 is arranged, so that the length of the first extending section 321 in the second direction Y is increased, the second extending section 323 is lengthened in the direction far away from the terminal body 31; and the second connecting portion 222 is connected to the lengthened region 3211, so the second connecting portion 222 is further away from the terminal body 31 in the first direction X; and therefore, the second connecting portion 222 can be made shorter, which is conducive to decreasing the length of the tab 22.

In some embodiments, with reference to FIG. 9, in the first direction X, the distance from the end of the second connecting portion 222 close to the terminal body 31 to the central axis 312 of the terminal body 31 is a second distance L₂, and the second distance L₂ is larger than or equal to the first distance L₁.

It can be L₂ > L₁, or L₂=L₁, and thus the orthographic projections of the second connecting portion 222 and the connecting region 3212 are not overlapped in the plane vertical to the axial Z of the terminal body 31. It is to be understood that the larger the difference between L₂ and L₁ is, the farther the second connecting portion 222 is away from the central axis 312 of the terminal body 31.

The second distance L₂ can also be measured by the vernier caliper. Specifically, firstly, the position of the central axis 312 of the terminal body 31 is determined from the end surface of one end of the terminal body 31 in the axial direction Z, and a marking point is made; and then the distance from one end of the second extending section 323 far away from the terminal body 31 to the marking point in the first direction X is measured by the vernier caliper in the environment of 25±2°C, and the distance is the first distance L₁.

In the embodiments, L₂≥L₁, so that the end of the second connecting portion 222 close to the terminal body 31 is further away from the terminal body 31 in the first direction X, furthermore, the length of the second connecting portion 222 is shortened, and the length of the tab 22 is further shortened.

In some embodiments, with reference to FIG. 8, the first connecting portion 221 is opposite to the middle position of the active substance-coated portion 21 in the first direction X; and/or, the terminal body 31 is opposite to the middle position of the active substance-coated portion 21 in the first direction X.

The first connecting portion 221 is opposite to the middle position of the active substance-coated portion 21 in the first direction X, namely, the distance from the first connecting portion 221 to the two ends of the active substance-coated portion 21 in the first direction X is basically equal.

The terminal body 31 is opposite to the middle position of the active substance-coated portion 21 in the first direction X, namely, the distance from the central axis 312 of the terminal body 31 to the two ends of the active substance-coated portion 21 in the first direction X is basically equal.

If the first connecting portion 221 is opposite to the middle position of the active substance-coated portion 21 in the first direction X, the tab 22 is arranged in the middle in the first direction X before being bent, which is conducive to molding the tab 22, and the difficulty in molding the tab 22 is reduced. If the terminal body 31 is opposite to the middle position of the active substance-coated portion 21 in the first direction X, the terminal body 31 is arranged in the middle in the first direction X, which is conducive to connecting the electrode terminal 3 and the external component (such as the bus component) to output or input the electric energy.

In some embodiments, with reference to FIG. 8, the tab 22 further includes a third connecting portion 224 and a fourth connecting portion 225; the first connecting portion 221, the third connecting portion 224, the fourth connecting portion 225 and the second connecting portion 222 are sequentially connected; and in the axial direction Z of the terminal body 31, the second connecting portion 222 and the third connecting portion 224 are oppositely arranged.

The third connecting portion 224 can be of a flat and straight sheet structure or an arc-shaped sheet structure; the fourth connecting portion 225 can be of a flat and straight sheet structure or an arc-shaped sheet structure. The third connecting portion 224 is bent relative to the first connecting portion 221, the fourth connecting portion 225 is bent relative to the third connecting portion 224, and the second connecting portion 222 is bent relative to the fourth connecting portion 225. The third connecting portion 224 and the first connecting portion 221 can be arranged by an acute angle, an obtuse angle or a right angle; and the fourth connecting portion 225 and the third connecting portion 224 can be arranged by an acute angle, an obtuse angle or a right angle, and the second connecting portion 222 and the fourth connecting portion 225 can be arranged by an acute angle, an obtuse angle or a right angle. In the embodiment shown in FIG. 8, the first connecting portion 221, the second connecting portion 222, the third connecting portion 224 and the fourth connecting portion 225 are all of flat and straight sheet structures, the third connecting portion 224 and the first connecting portion 221 are arranged by a right angle, the fourth connecting portion 225 and the third connecting portion 224 are arranged by a right angle, and the second connecting portion 222 and the fourth connecting portion 225 are arranged by a right angle.

The second connecting portion 222 and the third connecting portion 224 are oppositely arranged in the axial direction Z of the terminal body 31, that is, the orthographic projections of the second connecting portion 222 and the third connecting portion 224 are at least partially overlapped in a plane vertical to the axial direction Z of the terminal body 31.

In the embodiments, the tab 22 is in a bent state between the active substance-coated portion 21 and the electrode terminal 3, thus the internal space occupied by the tab 22 in the battery cell 10 is reduced, and more space is provided for the active substance-coated portion 21, which is conducive to improving the energy density of the battery cell 10.

In some embodiments, with reference to FIG. 9, in the axial direction Z of the terminal body 31, the second connecting portion 222 is connected to the side of the first extending section 321 facing the active substance-coated portion 21.

As an example, in the axial direction Z of the terminal body 31, the first extending section 321 is provided with a first surface 3213 and a second surface 3214 which are opposite to each other, in which, the first surface 3213 faces the active substance-coated portion 21, the second surface 3214 deviates from the active substance-coated portion 21, and the second connecting portion 222 is connected to the first surface 3213.

In the embodiments, the second connecting portion 222 is connected to the side of the first extending section 321 facing the active substance-coated portion 21, so that the distance from the second connecting portion 222 to the active substance-coated portion 21 in the axial direction Z of the terminal body 31 is reduced, and the length of the tab 22 can be effectively decreased.

In some other embodiments, the second connecting portion 222 can also be connected to other positions at the first extending section 321, for example, in the axial direction Z of the terminal body 31, the second connecting portion 222 is connected to the side of the first extending section 321 facing away from the active substance-coated portion 21.

In some embodiments, with reference to FIG. 9, the terminal body 31 and the position-limiting portion 32 are integrally molded. The connection strength of the terminal body 31 and the position-limiting portion 32 is high, the terminal body 31 and the position-limiting portion 32 are firm, and therefore, the possibility of the terminal body 31 separating from the position-limiting portion 32 due to impact force during regular use of the battery cell 10 is reduced, and the possibility of the battery cell 10 failing in regular use is reduced.

In some other embodiments, the terminal body 31 and the position-limiting portion 32 can also be separably arranged and connected. For example, the terminal body 31 and the position-limiting portion 32 are made of different materials, one of the terminal body 31 and the position-limiting portion 32 is made of copper, the other one is made of aluminum, and the terminal body 31 and the position-limiting portion 32 are composited together.

In some embodiments, with reference to FIG. 10, FIG. 10 is a partial enlarged view of a part B in FIG. 8. The battery cell 10 further includes a first insulating member 8; and in the axial direction Z of the terminal body 31, the first insulating member 8 includes a first insulating portion 81 arranged between the first extending section 321 and the wall portion 13, and a heat insulation structure is arranged on the side of the first insulating portion 81 facing the first extending section 321 and/or one side of the first extending section 321 facing the first insulating portion 81.

The first insulating member 8 is arranged on the side of the wall portion 13 facing the active substance-coated portion 21, and the first insulating member 8 insulates the position-limiting portion 32 from the wall portion 13 so as to realize the insulating and isolating of the wall portion 13 and the position-limiting portion 32. The first insulating member 8 is made of insulating materials, such as plastic, and rubber. The first insulating portion 81 is a part of the first insulating member 8 between the first extending section 321 and the wall portion 13.

The heat insulation structure can be arranged only on the side of the first insulating portion 81 facing the first extending section 321, or only on the side of the first extending section 321 facing the first insulating portion 81, or the heat insulation structures are arranged on both the side of the first insulating portion 81 facing the first extending section 321 and the side of the first extending section 321 facing the first insulating portion 81. The heat insulation structure can be various structures, such as a groove, and the heat insulating member.

The heat insulation structure plays a role in heat insulation, which delays or prevents heat transfer between the first extending section 321 and the first insulating portion 81, reduces the possibility of heat being transferred from the first extending section 321 to the first insulating portion 81 to melt the first insulating portion 81, and further reduces the possibility of first insulating portion 81 failing in insulation.

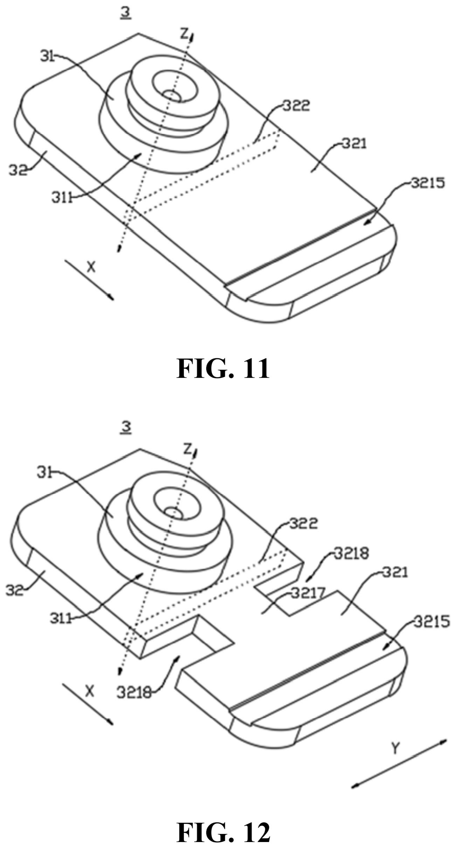

In some embodiments, with reference to FIG. 10 and FIG. 11, FIG. 11 is an isometric diagram of an electrode terminal 3 shown in FIG. 10. The heat insulation structure includes clearance grooves 3215 formed in the first insulating portion 81 and/or the first extending section 321.

It is to be understood that the clearance groove 3215 is only formed in the first insulating portion 81, or only formed in the first extending section 321, or the clearance grooves 3215 are formed in both the first insulating portion 81 and the first extending section 321.

Taking the clearance groove 3215 formed in the first extending section 321 as an example, in the axial direction Z of the terminal body 31, the surface of the first extending section 321 facing the first insulating portion 81 is the second surface 3214, and the clearance groove 3215 is formed in the second surface 3214 of the first extending section 321. In an embodiment that the first extending section 321 is provided with the lengthened region 3211, the clearance groove 3215 can be formed in the lengthened region 3211.

In the embodiments, the heat insulation structure is simple and easy to mold. The clearance groove 3215 is arranged, so that the first extending section 321 and the first insulating portion 81 are difficult to realize direct contact in a region corresponding to the clearance groove 3215, which achieves a good heat insulation effect.

In some other embodiments, on the basis that the clearance grooves 3215 are formed in the first insulating portion 81 and/or the first extending section 321, the heat insulation members are arranged on the first insulating portion 81 and/or the first extending section 321.

In some embodiments, with reference to FIG. 10, the second connecting portion 222 and the first extending section 321 are connected by welding to form a weld mark region 3216, and the orthographic projections of the weld mark region 3216 and the clearance groove 3215 are at least partially overlapped in a plane vertical to the axial direction Z of the terminal body 31.

The second connecting portion 222 and the first extending section 321 are connected by welding, and the weld mark region 3216 is a welding portion formed by welding the second connecting portion 222 and the first extending section 321. It is to be understood that the projection of the weld mark region 3216 in the axial direction Z of the terminal body 31 is at least partially located in the clearance groove 3215.

When welding the second connecting portion 222 and the first extending section 321, the first extending section 321 will produce a large amount of heat in the weld mark region 3216, which increases the temperature of the first extending section 321; and because the orthographic projections of the weld mark region 3216 and the clearance groove 3215 are at least partially overlapped in the plane vertical to the axial direction Z of the terminal body 31, the clearance groove 3215 can achieve a good heat insulation effect to reduce the influence of the first extending section 321 and the second connecting portion 222 on the first insulating portion 81 in the welding process.

In some embodiments, the area of the orthographic projection of the weld mark region 3216 in the plane vertical to the axial direction Z of the terminal body 31 is S₁, and the area of the overlapped region of the orthographic projections of the weld mark region 3216 and the clearance groove 3215 in the plane vertical to the axial direction Z of the terminal body 31 is S₂, which meet: S₂/S₁≥1/3.

S₂/S₁, it can be a point value of any one of 1/3, 1/2, 2/3, and 1 or a range value between any two of previous values.

Taking the weld mark region 3216 and the clearance groove 3215 correspondingly formed in two opposite surfaces of the first extending section 321 as an example, a specific method for measuring S₂ and S₁ includes: clamping the electrode terminal 3 by a clamp, and making the weld mark region 3216 upward; measuring the area of a region defined by the contour of the weld mark region 3216 by a CCD camera right above the electrode terminal 3, in which, the area is S₁; overturning the electrode terminal 3 by an overturning mechanism in the clamp, so as to rotate the electrode terminal 3 by 180° around an axis extending in the first direction X, in which, the clearance groove 3215 faces upwards; and measuring the area of an overlapped region of the region defined by the contour of the clearance groove 3215 and the region defined by the contour of the weld mark region 3216 by the CCD camera, in which, the overlapped region is S₂.

In the embodiments, S₂/S₁≥1/3, the proportion of the area of the overlapped region of the orthographic projections of the weld mark region 3216 and the clearance groove 3215 in the plane to the area of the orthographic projection of the weld mark region 3216 in the plane is relatively large, and more heat produced by the weld mark region 3216 in the welding process of the first extending section 321 can be blocked by the clearance groove 3215, so that the blocking capability of the clearance groove 3215 on the heat of the weld mark region 3216 is improved.

In some embodiments, S₂/S₁≥1/2.

In the embodiment shown in FIG. 10, S₂/S₁=1, so the projection of the weld mark region 3216 in the axial direction Z of the terminal body 31 is completely within the clearance groove 3215.

In the embodiments, S₂/S₁≥1/2 so the proportion of S₂ in S₁ is further increased, and furthermore, the blocking capability of the clearance groove 3215 on the heat of the weld mark region 3216 is improved.

In some embodiments, with reference to FIG. 12, FIG. 12 is an isometric diagram of an electrode terminal 3 provided by some other embodiments of the present application. A fusing portion 3217 is formed at the first extending section 321.

The fusing portion 3217 is a part, which can be fused in a case of overcurrent, of the first extending section 321, and the resistance of the fusing portion 3217 is greater than that of other parts of the first extending section 321. One or a plurality of fusing portions 3217 can be formed on the first extending section 321. The fusing portions 3217 can be correspondingly formed in a manner of arranging holes or grooves in the first extending section 321. In the embodiment that the first extending section 321 includes the connecting region 3212 and the lengthened region 3211, the fusing portion 3217 can be located in the connecting region 3212, or the fusing portion 3217 can be located in the lengthened region 3211, or one part of the fusing portion 3217 is located in the connecting region 3212 while the other part thereof is located in the lengthened region 3211.

In the embodiments, the first extending section 321 is provided with the fusing portion 3217, and when the current passing through the first extending section 321 is too large, the fusing portion 3217 can be automatically fused to realize overcurrent protection for the battery cell 10.

In some embodiments, with reference to FIG. 12, the first extending section 321 is provided with a through hole 3218, and two ends of the through hole 3218 extend to the two opposite surfaces of the first extending section 321 in the axial direction Z of the terminal body 31 respectively, thus forming the fusing portion 3217.

One or a plurality of through holes 3218 are formed in the first extending section 321. The through hole 3218 can be a circular hole, a rectangular hole and the like. The through hole 3218 can be complete holes or incomplete holes. If the through hole 3218 does not extend to the edge of the first extending section 321 in the direction vertical to the axial direction Z of the terminal body 31, the through hole 3218 is the complete hole; and if the through hole 3218 extends to the edge of the first extending section 321 in the direction vertical to the axial direction Z of the terminal body 31, the through hole 3218 is the incomplete hole.

As an example, the two opposite surfaces of the first extending section 321 in the axial direction Z of the terminal body 31 are the first surface 3213 (not shown in FIG. 12) and the second surface 3214 (not shown in FIG 12) respectively, the first surface 3213 faces the active substance-coated portion 21 (not shown in FIG. 12), the second surface 3214 deviates from the active substance-coated portion 21, the first surface 3213 is connected to the second connecting portion 222, and the clearance groove 3215 is formed in the second surface 3214.

In the embodiments, the fusing portion 3217 is correspondingly formed in a manner of arranging the through hole 3218 in the first extending section 321, so the molding manner of the fusing portion 3217 is simple. After the through hole 3218 is formed in the first extending section 321, the cross sectional area of the formed fusing portion 3217 is smaller than that of other parts of the first extending section 321, so that the resistance of the fusing portion 3217 is greater than that of other parts of the first extending section 321, and when the current flowing through the first extending section 321 is too large, the fusing portion 3217 will be heated and fused.

In some embodiments, the first extending section 321 is provided with a plurality of through holes 3218, the plurality of through holes 3218 are arranged at intervals in a second direction Y, and the second direction Y intersects with the first direction X.

Two, three, four and five through holes 3218 may be formed in the first extending section 321. In the second direction Y, one fusing portion 3217 is formed between every two adjacent through holes 3218. As an example, the second direction Y, the first direction X and the axial direction Z of the terminal body 31 are vertical to one another.

Under the condition that the overcurrent area of the fusing portion 3217 is constant, the plurality of through holes 3218 are formed in the first extending section 321, and the through holes 3218 can be made smaller, so that difficulty in molding the through holes 3218 is reduced.

In some embodiments, with reference to FIG. 12, the first extending section 321 is provided with two through holes 3218; and in the second direction Y, the two through holes 3218 extend to the two ends of the first extending section 321 respectively, and the fusing portion 3217 is located between the two through holes 3218.

As the two through holes 3218 extend to the two ends of the first extending section 321 in the second direction Y respectively, the through holes 3218 are the incomplete holes, and the two through holes 3218 can be regarded as two notches formed in the two ends of the first extending section 321 in the second direction Y respectively.

In the embodiments, only one fusing portion 3217 is formed on the first extending section 321, so the overcurrent area of the fusing portion 3217 is easier to control; and the structure of the electrode terminal 3 is simplified, and thus the difficulty in molding the electrode terminal 3 is reduced.

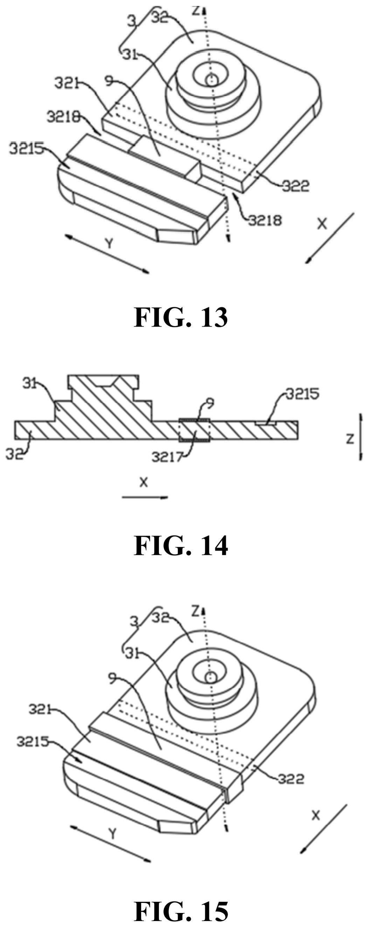

In some embodiments, with reference to FIG. 13 to FIG. 15, FIG. 13 is an isometric diagram of an electrode terminal 3 and a second insulating member 9 after connection according to some embodiments of the present application; FIG. 14 is a cross-sectional view of an electrode terminal 3 and a second insulating member 9 shown in FIG. 13 after connection; and FIG. 15 is an isometric diagram of an electrode terminal 3 and a second insulating member 9 after connection according to some other embodiments of the present application. The battery cell 10 further includes a second insulating member 9, and the second insulating member 9 covers at least a part of the outer surface of the fusing portion 3217.

The second insulating member 9 is made of an insulating material, such as plastic, and rubber. The second insulating member 9 can cover a part of the outer surface of the fusing portion 3217 and can also cover the whole outer surface of the fusing portion 3217.

In the embodiments shown in FIG. 13 and FIG. 14, the second insulating member 9 covers the periphery of the fusing portion 3217, so that the second insulating member 9 covers the whole outer surface of the fusing portion 3217. In the embodiment shown in FIG. 15, the second insulating member 9 covers the periphery of the first extending section 321, so that the fusing portion 3217 and the through holes 3218 are both located in the second insulating member 9 and shielded by the second insulating member 9. The second insulating member 9 can be partially filled in the through holes 3218.

In the embodiments, the second insulating member 9 plays an insulating role, which reduces the risk that the electrode terminal 3 conducts a positive electrode plate and a negative electrode plate after the fusing portion 3217 is fused.

In some embodiments, the second insulating member 9 includes an insulating coating arranged on the outer surface of the fusing portion 3217, an insulating glue layer bonded to the outer surface of the fusing portion 3217 or a hot-melting insulating layer connected to the outer surface of the fusing portion 3217 in a hot-melting mode.

In an embodiment that the second insulating member 9 is the insulating coating arranged on the outer surface of the fusing portion 3217, under the condition that the insulating coating is arranged on the surface of the fusing portion 3217, the insulating coating can also be arranged on the hole wall surface of each through hole 3218. The insulating coating is small in thickness and occupies a small space.

In an embodiment that the second insulating member 9 is the insulating glue layer bonded to the outer surface of the fusing portion 3217, the insulating glue layer can wrap the periphery of the fusing portion 3217 and can also wrap the periphery of the first extending section 321, and therefore the fusing portion 3217 and the through holes 3218 are both located in the insulating glue layer and shielded by the insulating glue layer. The insulating glue layer can be bonded to the fusing portion 3217, thus the assembling efficiency is high, and the production cost is low.

In an embodiment that the second insulating member 9 is the hot-melting insulating layer connected to the outer surface of the fusing portion 3217 in a hot-melting mode, the hot-melting insulating layer can wrap the periphery of the fusing portion 3217 and can also wrap the periphery of the first extending section 321, and therefore the fusing portion 3217 and the through holes 3218 are both located in the hot-melting insulating layer and shielded by the hot-melting insulating layer, and the through holes 3218 can be partially filled with the hot-melting insulating layer. The hot-melting insulating layer is connected to the fusing portion 3217 in a hot-melting mode, and it can play an insulating role and can also play a limiting role after the fusing portion 3217 is fused, thus maintaining the original form of the electrode terminal 3, reducing the possibility of the electrode terminal 3 making contact with the electrode plate in the active substance-coated portion 21 after the fusing portion 3217 is fused, and further reducing the possibility of short circuit in the battery cell 10.

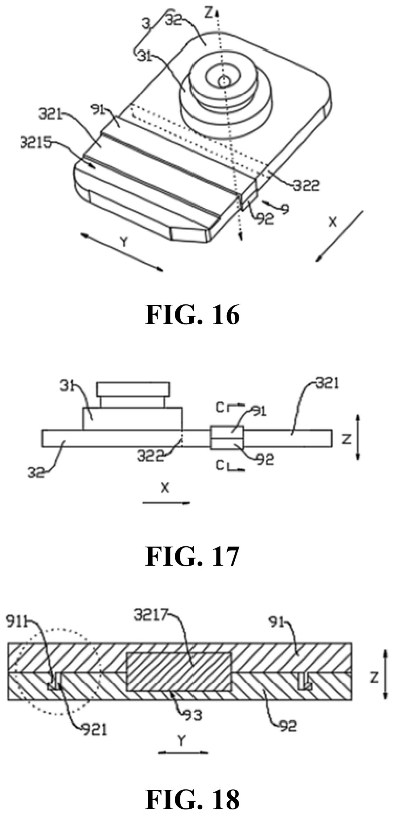

In some embodiments, with reference to FIG. 16 to FIG. 18, FIG. 16 is an isometric diagram of an electrode terminal 3 and a second insulating member 9 after connection according to yet some other embodiments of the present application; FIG. 17 is a structural schematic diagram of an electrode terminal 3 and a second insulating member 9 shown in FIG. 16 after connection; and FIG. 18 is a C-C cross-sectional view of an electrode terminal 3 and a second insulating member 9 shown in FIG. 17 after connection. The second insulating member 9 includes a second insulating portion 91 and a third insulating portion 92 which jointly define a first space 93, the fusing portion 3217 is accommodated in the first space 93, and the second insulating portion 91 is detachably connected to the third insulating portion 92.

The second insulating portion 91 and the third insulating portion 92 are two separably arranged parts of the second insulating member 9. The second insulating portion 91 and the third insulating portion 92 can be detachably connected in various modes, such as clamping, interference fit and locking members. The locking members can be a screw, a bolt and the like.

The first space 93 is a space in the second insulating member 9, and the first space 93 is defined by the second insulating portion 91 and the third insulating portion 92, namely, one part of the first space 93 can be located in the second insulating portion 91 while the other part thereof can be located in the third insulating portion 92.

In the embodiments, the second insulating portion 91 is detachably connected to the third insulating portion 92, so that the second insulating member 9 can be conveniently mounted and dismounted. The second insulating member 9 with such structure can achieve an insulating effect and also can achieve a limiting effect after the fusing portion 3217 is fused, thus maintaining the original form of the electrode terminal 3, reducing the possibility of the electrode terminal 3 making contact with the electrode plate in the active substance-coated portion 21 after the fusing portion 3217 is fused, and further reducing the possibility of short circuit in the battery cell 10.

In some embodiments, with reference to FIG. 18, the second insulating portion 91 is provided with a first clamping portion 911, the third insulating portion 92 is provided with a second clamping portion 921, and the first clamping portion 911 is in clamping fit with the second clamping portion 921.

As an example, in FIG. 18, the first clamping portion 911 is a clamping hook, and the clamping hook protrudes out of the surface of the second insulating portion 91 facing the third insulating portion 92. The second clamping portion 921 is a clamping groove matched with the clamping hook, and the clamping groove is formed in the surface of the third insulating portion 92 facing the second insulating portion 91.

When mounting the second insulating member 9, the first clamping portion 911 and the second clamping portion 921 are in clamping fit to connect the second insulating portion 91 and the third insulating portion 92 together; and if the first clamping portion 911 and the second clamping portion 921 are released from clamping fit, the second insulating portion 91 and the third insulating portion 92 can be separated, and therefore, the second insulating portion 91 and the third insulating portion 92 can be conveniently mounted and dismounted.

In some other embodiments, the first clamping portion 911 and the second clamping portion 921 can be of other structures, for example, the first clamping portion 911 is a protrusion, the second clamping portion 921 is a slot, and the protrusion is inserted into the slot to realize interference fit.

In some embodiments, the position-limiting portion 32 is provided with a weight reducing structure.

The weight reducing structure can be various structures, for example, the weight reducing structure is a hole, a groove and the like formed in the position-limiting portion 32.

In the embodiments, the weight reducing structure is arranged, so that the weight of the electrode terminal 3 can be reduced, and furthermore, the weight of the battery cell 10 is reduced.

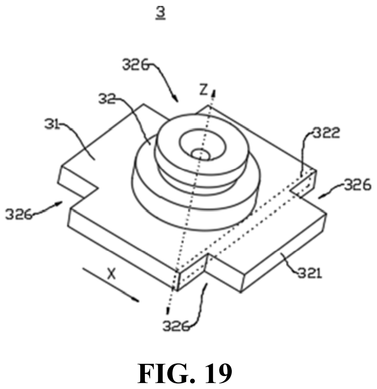

In some embodiments, with reference to FIG. 19, FIG. 19 is an isometric diagram of an electrode terminal 3 provided by some embodiments of the present application. The weight reducing structure includes a weight reducing hole 326 formed in the position-limiting portion 32, and two ends of the weight reducing hole 326 extend to the two opposite surfaces of the position-limiting portion 32 in the axial direction Z of the terminal body 31 respectively.

One or a plurality of weight reducing holes 326 can be arranged in the position-limiting portion 32. The weight reducing hole 326 can be a circular hole, a rectangular hole and the like. The weight reducing hole 326 can be a complete hole or an incomplete hole. If the through hole 3218 does not extend to the edge of the position-limiting portion 32 in the direction vertical to the axial direction Z of the terminal body 31, the through hole 3218 is the complete hole; and if the through hole 3218 extends to the edge of the position-limiting portion 32 in the direction vertical to the axial direction Z of the terminal body 31, the through hole 3218 is the incomplete hole.

In the embodiments, the weight reducing hole 326 is arranged in the position-limiting portion 32, so that the weight of the electrode terminal 3 can be reduced, and the implementation mode is simple.

In some embodiments, the weight reducing structure includes a plurality of weight reducing holes 326, and the weight reducing holes 326 are formed around the terminal body 31.

Two, three, four and five weight reducing holes 326 may be arranged in the position-limiting portion 32.

In the embodiments, the plurality of weight reducing holes 326 are formed in the position-limiting portion 32, so that the weight of the electrode terminal 3 can be further reduced.

In some embodiments, with reference to FIG. 19, the weight reducing holes 326 are formed in four corners of the position-limiting portion 32.

As an example, the position-limiting portion 32 is a rectangular plate, the weight reducing holes 326 are the incomplete holes, and the weight reducing holes 326 extend to the end of the position-limiting portion 32 in the length direction and the end of the position-limiting portion 32 in the width direction.

In the embodiments, the weight reducing holes 326 are formed in the four corners of the position-limiting portion 32, so that the weight of the electrode terminal 3 is further reduced while overcurrent of the electrode terminal 3 is not likely to be affected.

In some embodiments, the weight reducing holes 326 are formed in the first extending section 321 to correspondingly form the fusing portion 3217.

In the embodiment shown in FIG. 12, the through holes 3218 in the first extending section 321 can be used as the weight reducing holes 326.

In the embodiment, the weight reducing holes 326 are formed in the first extending section 321, so that the weight of the electrode terminal 3 while the fusing portion 3217 is formed.

In some embodiments, the shell 1 includes the case 11 and the end cover 12, the case 11 is provided with an opening, the end cover 12 covers the opening, and the end cover 12 is the wall portion 13.

It is to be understood that the electrode terminal 3 is arranged on the end cover 12. The end cover 12 and the case 11 can be connected in various modes, such as welding, and rolling and sealing.

As an example, the end cover 12 is a rectangular end cover, and the width direction of the end cover 12 is parallel to the first direction X.

When assembling the battery cell 10, the electrode terminal 3 can be firstly mounted on the end cover 12, then the tab 22 is connected to the electrode terminal 3, then the electrode assembly 2 is accommodated in the case 11, and finally the end cover 12 is connected to the case 11 so as to cover the opening of the case 11. According to this structure, the mounting of the electrode terminal 3 and the connection between the tab 22 and the electrode terminal 3 can be implemented more conveniently.

An embodiment of the present application provides a battery 100 which includes the battery cell 10 provided by any one of the abovementioned embodiments.

An embodiment of the present application provides an electrical device which includes the battery cell 10 provided by any one of the abovementioned embodiments, and the battery cell 10 is configured to provide electric energy to the electrical device.

With reference to FIG. 8 to FIG. 11, an embodiment of the present application further provides the battery cell 10, and the battery cell 10 includes the shell 1, the electrode assembly 2 and the electrode terminal 3. The shell 1 is a cuboid and includes the case 11 and the end cover 12, the case 11 is provided with the opening, the end cover 12 covers the opening of the case 11, and the lead-out hole 131 is formed in the end cover 12. The electrode assembly 2 is accommodated in the shell 1 and includes the active substance-coated portion 21 and the tab 22, and the tab 22 is arranged at the end of the active substance-coated portion 21 facing the end cover 12. The electrode terminal 3 includes the terminal body 31 and the position-limiting portion 32 which are integrally molded, the terminal body 31 penetrates into the lead-out hole 131, the position-limiting portion 32 is configured to limit the terminal body 31 from separating from the lead-out hole 131 in the direction facing away from the active substance-coated portion 21, and the terminal body 31 is opposite to the middle position of the active substance-coated portion 21 in the first direction X. The position-limiting portion 32 includes the first extending section 321 protruding out of the peripheral face 311 of the terminal body 31 in the first direction X and the second extending section 323 protruding out of the peripheral face 311 of the terminal body 31 in the direction opposite to the first direction X, and in the first direction X, the distance from the end of the second extending section 323 far away from the terminal body 31 to the central axis 312 of the terminal body 31 is the first distance; and the first extending section 321 includes the lengthened region 3211, and the distance from the lengthened region 3211 to the central axis 312 is larger than or equal to the first distance. The tab 22 is bent between the electrode terminal 3 and the active substance-coated portion 21 and includes the first connecting portion 221, the second connecting portion 222, the third connecting portion 224 and the fourth connecting portion 225; the first connecting portion 221 is connected to the active substance-coated portion 21 by the tab root portion 223; the second connecting portion 222 is welded to the side of the lengthened region 3211 facing the active substance-coated portion 21, and the weld mark area 3216 is formed; the first connecting portion 221, the third connecting portion 224, the fourth connecting portion 225 and the second connecting portion 222 are sequentially connected; and in the axial direction Z of the terminal body 31, the second connecting portion 222 and the third connecting portion 224 are oppositely arranged, and the first connecting portion 221 is opposite to the middle position of the active substance-coated portion 21 in the first direction X. The first direction X is parallel to the width direction of the end cover 12.

The battery cell 10 further includes the first insulating member 8; in the axial direction Z of the terminal body 31, the first insulating member 8 includes the first insulating portion 81 arranged between the first extending section 321 and the wall portion 13; the clearance groove 3215 is formed in the side of the first extending section 321 facing the first insulating portion 81; the orthographic projections of the weld mark region 3216 and the clearance groove 3215 are at least partially overlapped in the plane vertical to the axial direction Z of the terminal body 31.

In such battery cell 10, the second connecting portion 222 is located on the side of the first connecting portion 221 in the first direction X; the second connecting portion 222 is connected to the first extending section 321, protruding out of the peripheral surface 311 of the terminal body 31 in the first direction X, in the position-limiting portion 32, so that the length of the second connecting portion 222 is shortened, furthermore, the length of the tab 22 is shortened, which reduces the possibility of dislocation and pleating of the tab in the production process 22, and further improves the reliability of the battery cell 10. The first extending section 321 is provided with the lengthened region 3211, and the second connecting portion 222 is connected to the lengthened region 3211, so the length of the tab 22 can be further shortened. The clearance groove 3215 is formed in the first extending section 321, so that the first extending section 321 and the first insulating portion 81 are difficult to realize direct contact in the region corresponding to the clearance groove 3215, which delays or blocks the heat transfer between the first extending section 321 and the first insulating portion 81, reduces the possibility of heat being transferred from the first extending section 321 to the first insulating portion 81 to melt the first insulating portion 81, and further reduces the possibility of the first insulating portion 81 failing in insulation.

It is to be noted that, without conflict, the embodiments in the present application and the features in the embodiments may be combined with each other.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery cell, comprising:
a shell which comprises a wall portion, the wall portion being provided with a lead-out hole;
an electrode assembly which is accommodated in the shell and comprises an active substance-coated portion and a tab, the tab being disposed at an end of the active substance-coated portion facing the wall portion; and
an electrode terminal comprising a terminal body and a position-limiting portion, the terminal body penetrating into the lead-out hole, the position-limiting portion being configured to limit the terminal body from separating from the lead-out hole in a direction facing away from the active substance-coated portion, and the position-limiting portion comprising a first extending section protruding out of a peripheral surface of the terminal body along a first direction; wherein
the tab comprises a first connecting portion and a second connecting portion, the second connecting portion being located at one side of the first connecting portion along the first direction, the first connecting portion being connected to the active substance-coated portion, and the second connecting portion being connected to the first extending section.

2. The battery cell according to claim 1, wherein the position-limiting portion further comprises a second extending section protruding out of the peripheral surface of the terminal body in a direction opposite to the first direction;
in the first direction, the distance from the end of the second extending section far away from the terminal body to the central axis of the terminal body is a first distance; and the first extending section comprises a lengthened region, the distance from the lengthened region to the central axis is larger than or equal to the first distance, and the second connecting portion is connected to the lengthened region.

3. The battery cell according to claim 2, wherein in the first direction, the distance from the end of the second connecting portion close to the terminal body to the central axis is a second distance, and the second distance is larger than or equal to the first distance.

4. The battery cell according to any one of claims 1 to 3, wherein the first connecting portion is opposite to the middle position of the active substance-coated portion in the first direction; and/or, the terminal body is opposite to the middle position of the active substance-coated portion in the first direction.

5. The battery cell according to any one of claims 1 to 4, wherein the tab further comprises a third connecting portion and a fourth connecting portion; the first connecting portion, the third connecting portion, the fourth connecting portion and the second connecting portion are sequentially connected; and the second connecting portion and the third connecting portion are oppositely arranged in the axial direction of the terminal body.

6. The battery cell according to any one of claims 1 to 5, wherein in the axial direction of the terminal body, the second connecting portion is connected to the side of the first extending section facing the active substance-coated portion.

7. The battery cell according to any one of claims 1 to 6, wherein the terminal body and the position-limiting portion are integrally molded.

8. The battery cell according to any one of claims 1 to 7, wherein the battery cell further comprises a first insulating member; and in the axial direction of the terminal body, the first insulating member comprises a first insulating portion arranged between the first extending section and the wall portion, and heat insulation structures are arranged on the side of the first insulating portion facing the first extending section and/or the side of the first extending section facing the first insulating portion.

9. The battery cell according to claim 8, wherein the heat insulation structures comprise clearance grooves formed in the first insulating portion and/or the first extending section.

10. The battery cell according to claim 9, wherein the second connecting portion and the first extending section are connected by welding to form a weld mark region, and the orthographic projections of the weld mark region and the clearance grooves are at least partially overlapped in a plane vertical to the axial direction of the terminal body.

11. The battery cell according to claim 10, wherein the area of the orthographic projection of the weld mark region in the plane is S₁, and the area of the overlapped region of the orthographic projections of the weld mark region and the clearance grooves in the plane is S₂, which meet: S₂/S₁≥1/3.

12. The battery cell according to claim 11, wherein S_{Z}/S₁>_1/2.

13. The battery cell according to any one of claims 1 to 12, wherein a fusing portion is formed on the first extending section.

14. The battery cell according to claim 13, wherein a through hole is formed in the first extending section, and two ends of the through hole correspondingly extend to the two opposite surfaces of the first extending section in the axial direction of the terminal body to correspondingly form the fusing portion.

15. The battery cell according to claim 14, wherein a plurality of through holes are formed in the first extending section, the plurality of through holes are arranged at intervals in a second direction, and the second direction intersects with the first direction.

16. The battery cell according to claim 15, wherein the first extending section is provided with two through holes; and in the second direction, the two through holes extend to the two ends of the first extending section respectively, and the fusing portion is located between the two through holes.

17. The battery cell according to any one of claims 13 to 16, wherein the battery cell further comprises a second insulating member, and the second insulating member covers at least a part of the outer surface of the fusing portion.

18. The battery cell according to claim 17, wherein the second insulating member comprises an insulating coating arranged on the outer surface of the fusing portion, an insulating glue layer bonded to the outer surface of the fusing portion or a hot-melting insulating layer connected to the outer surface of the fusing portion in a hot-melting mode.

19. The battery cell according to claim 17, wherein the second insulating member comprises a second insulating portion and a third insulating portion which jointly define a first space, the fusing portion is accommodated in the first space, and the second insulating portion is detachably connected to the third insulating portion.

20. The battery cell according to claim 19, wherein the second insulating portion is provided with a first clamping portion, the third insulating portion is provided with a second clamping portion, and the first clamping portion is in clamping fit with the second clamping portion.

21. The battery cell according to any one of claims 1 to 20, wherein the position-limiting portion is provided with a weight reducing structure.

22. The battery cell according to claim 21, wherein the weight reducing structure comprises a weight reducing hole formed in the position-limiting portion, and two ends of the weight reducing hole extend to two opposite surfaces of the position-limiting portion in the axial direction of the terminal body respectively.

23. The battery cell according to claim 22, wherein the weight reducing structure comprises a plurality of weight reducing holes which are formed around the terminal body.

24. The battery cell according to claim 22 or 23, wherein the weight reducing holes are formed in four corners of the position-limiting portion.

25. The battery cell according to claim 22, wherein the weight reducing holes are formed in the first extending section to correspondingly form the fusing portion.

26. The battery cell according to any one of claims 1 to 25, wherein the shell comprises:
a case having an opening; and
an end cover which covers the opening, the end cover being the wall portion.

27. A battery, comprising the battery cell according to any one of claims 1 to 26.

28. An electrical device, comprising the battery cell according to any one of claims 1 to 26, wherein the battery cell is configured to provide electric energy to the electrical device.
